# FASCICULE DE BREVET EUROPEEN

(11) **EP 3 959 503 B1**
(45) Date de publication et mention de la délivrance du brevet: **02.08.2023**
(21) Numéro de dépôt: 20725989.6
(22) Date de dépôt: 24.04.2020
(51) Int. Cl.: G01N 15/12

(54) **DISPOSITIF D'ANALYSES MÉDICALES À TRAITEMENT DE SIGNAUX D'IMPÉDANCE**
VORRICHTUNG FÜR MEDIZINISCHE ANALYSEN MIT IMPEDANZSIGNALVERARBEITUNG
DEVICE FOR MEDICAL ANALYSES WITH IMPEDANCE SIGNAL PROCESSING

(30) Priorité: 25.04.2019 FR 1904410
(43) Date de publication de la demande: 02.03.2022
(73) Titulaire: Horiba ABX SAS, 34184 Montpellier Cedex 4 (FR); CENTRE NATIONAL DE LA RECHERCHE SCIENTIFIQUE (C.N.R.S.), 75016 Paris (FR); UNIVERSITE DE MONTPELLIER, 34090 Montpellier (FR)
(72) Inventeur: TARACONAT, Pierre, 34070 Montpellier (FR); ISEBE, Damien, 34790 Grabels (FR); MENDEZ, Simon, 34000 Montpellier (FR); NlCOUD, Franck, 34160 Restinclières (FR)
(74) Mandataire: Cabinet Netter
(86) Numéro de dépôt international: PCT/EP2020/061564
(87) Numéro de publication internationale: WO 2020/216952

(56) Documents cités:
- US-B1- 6 437 551
- M O Breitmeyer ET AL: "Model of red blood cell rotation in the flow toward a cell sizing orifice. Application to volume distribution", Biophysical journal, 1 février 1971 (1971-02-01), pages 146-157, XP055660126, United States Extrait de l'Internet: URL:https://www.ncbi.nlm.nih.gov/pmc/artic les/PMC1484020/pdf/biophysj00738-0021.pdf [extrait le 2020-01-20]

## Description

L'invention concerne le domaine de l'hématologie, et en particulier les appareils de comptage cellulaire.

Depuis les années 1950, le comptage et la volumétrie des différentes cellules sanguines dans les automates d'hématologie sont effectués par mesure d'impédance, selon une méthode connue sous le nom de Principe Coulter. Cette méthode consiste à faire passer les cellules en suspension dans un liquide conducteur à travers un micro-orifice polarisé et à détecter les variations de résistance électrique (ou variations d'impédance) induites par les passages de particule dans l'orifice. La détection des différentes impulsions ainsi générées permet le comptage des éléments.

Des développements analytiques ont été présentés dans la littérature par plusieurs auteurs, dont Graver et al dans « Electrical sizing ofparticles in suspensions:I.theory. » Biophysical Journal, 9:1398-1414, 1969 et Hurley dans « Sizing particles with a Coulter counter » Biophysical Journal, 10:74-79, 1970 qui enseignent comment l'amplitude de la perturbation électrique permet de recouvrer le volume de la cellule sous certaines hypothèses selon la formule : U=(r.fs.i)V/S^2, où U est la variation de tension aux bornes des électrodes, V le volume de la particule, S la section de l'orifice, r la conductivité électrique du milieu, i l'intensité imposée constante et fs le facteur de forme de la cellule qui dépend de l'orientation et de la forme de celle-ci.

Cette formule permet de construire la distribution de volume des cellules analysées sous condition d'un champ électrique homogène, d'une taille de cellule beaucoup plus petite que celle de l'orifice et d'un facteur de forme constant. Par exemple, dans le cas des Globules Rouges (GR), le Volume Globulaire Moyen (VGM) et un Indice De Répartition (IDR) sont définis à partir de la distribution des hauteurs de pulse, et constituent des paramètres hématologiques importants. Cette formule permet également de recouvrer le volume réel, en multipliant le volume V par un coefficient impliquant le facteur de forme fs.

Ces calculs reposent sur les hypothèses que le facteur de forme fs est constant, et que le champ électrique est homogène. Or, dans les dispositifs conventionnels, ces hypothèses ne sont généralement pas respectées. En effet, d'une part, le champ électrique est inhomogène (il est plus élevé près des bords), et d'autre part, lorsque les cellules passent proches des parois, les effets hydrodynamiques sont importants (notamment en raison des contraintes de cisaillement) et elles peuvent tourner ou prendre des formes complexes. Dans ces cas, le facteur de forme évolue, par rapport à des passages cellulaires au centre, et doit être corrigé si l'on veut retrouver un volume réel correct.

Dans les dispositifs actuels, le facteur de forme n'est pas corrigé en fonction de la trajectoire de la cellule, et les signaux d'impédance associés à des passages cellulaires proches des parois présentent des hauteurs de pulses conduisant à une surestimation des volumes cellulaires à cause des artéfacts électrostatiques et/ou hydrodynamiques.

De ce fait, les distributions volumiques obtenues sont généralement dissymétriques, avec une queue à droite plus longue (distribution dite de type « right-skew »), et la mesure des paramètres volumétriques des cellules (VGM et IDR) s'en trouve faussée.

Plusieurs solutions ont été proposées pour résoudre ces problèmes :
- sphériser les globules rouges permet d'annuler l'impact sur le facteur de forme, mais implique le développement d'un réactif spécifique pour modifier l'osmolarité,
- allonger l'orifice permet d'homogénéiser le champ électrique, mais génère des pertes de charges importante et un risque plus élevé de passages en coïncidences (lorsque deux cellules passent en même temps à travers l'orifice, ce qui les rend indis-tinguables),
- trier les impulsions pour retirer celles correspondant aux trajectoires de cellules près des bords, mais ces méthodes, basées sur la largeur des pulses ne sont pas efficaces, même lorsque la hauteur des pulses est prise en compte (notamment lorsque la taille des cellules varie), et elles ne permettent pas d'identifier une information de rotation des cellules.

Comme aucune de ces solutions n'apportait satisfaction, la technologie de focalisation hydrodynamique, ou hydrofocalisation a été développée. Cette solution consiste à réaliser un gainage hydrodynamique du flux de cellules qu'on cherche à analyser, ce qui permet de le centrer dans l'orifice et limite les effets liés aux passages au bord. Cette technique est néanmoins très complexe à mettre en oeuvre et particulièrement coûteuse. Le document US6437551 B divulgue un dispositif d'analyses médicales à traitement de signaux d'impédance cellulaire.

L'invention vient améliorer la situation.

A cet effet, l'invention propose un dispositif d'analyses médicales à traitement de signaux d'impédance cellulaire, comprenant une mémoire agencée pour recevoir des jeux de données de pulse, chaque jeu de données de pulse comprenant des données de valeur d'impédance associées à chaque fois à un marqueur de temps, ces données représentant ensemble une courbe de valeurs d'impédance cellulaire mesurées lors du passage d'une cellule dans un orifice polarisé, un calculateur agencé pour traiter un jeu de données de pulse en déterminant une valeur de rotation indiquant si la cellule dont a été tirée ce jeu de données de pulse a fait l'objet d'une rotation lors de son passage dans l'orifice polarisé, et un classificateur agencé pour appeler le calculateur avec un jeu de données de pulse donné, et pour utiliser la valeur de rotation résultante pour classer le jeu de données de pulse donné dans un ensemble de jeux de données de pulse à rotation ou dans un ensemble de jeux de données de pulse sans rotation.

Ce dispositif est avantageux car, en tenant compte de l'ensemble de jeux de pulses sans rotation, il permet d'obtenir des résultats similaires à ceux que l'on peut obtenir sur des systèmes hydrofocalisés, mais à un coût et avec une complexité de mise en oeuvre bien moindres.

En variante, le dispositif selon l'invention peut présenter une ou plusieurs des caractéristiques suivantes :
- le calculateur est agencé pour traiter un jeu de données de pulse en :
   * déterminant une valeur d'impédance maximale du jeu de données de pulse,
   * calculant une valeur d'impédance haute en multipliant la valeur d'impédance maximale par un coefficient haut choisi dans la plage [0,7 ; 0,95], et en déterminant dans le jeu de données de pulse les marqueurs de temps dont la valeur d'impédance associée dans le jeu de données de pulse est égale à la valeur d'impédance haute, et en calculant une durée haute correspondant à la durée maximale entre ces marqueurs de temps,
   * calculant une valeur d'impédance basse en multipliant la valeur d'impédance maximale par un coefficient bas choisi dans la plage [0,1 ; 0,6], et en déterminant dans le jeu de données de pulse les marqueurs de temps dont la valeur d'impédance associée dans le jeu de données de pulse est égale à la valeur d'impédance basse, et en calculant une durée basse correspondant à la durée maximale entre ces marqueurs de temps,
   * retournant une valeur de rotation déterminée à partir d'un ratio calculé à partir de la durée haute et de la durée basse,
- le coefficient haut est choisi dans la plage [0,8 ; 0,9],
- le coefficient bas est choisi dans la plage [0,3 ; 0,6],
- le coefficient haut vaut 0,875 et le coefficient bas vaut 0,5,
- le calculateur retourne une valeur de rotation égale à la division de la durée haute par la durée basse, et dans lequel le classificateur est agencé pour classer un jeu de données de pulse dont la valeur de rotation est strictement inférieure à 0,45 dans l'ensemble de jeux de données de pulse à rotation et pour classer un jeu de données de pulse dont la valeur de rotation est supérieure à 0,45 dans l'ensemble de jeux de données de pulse sans rotation,
- le calculateur est un réseau neuronal comprenant d'une part un convertisseur agencé pour traiter un jeu de données de pulse pour l'adapter en vue d'un traitement par un réseau neuronal, agencé pour réaliser un adimensionnement des marqueurs de temps et des valeurs d'impédance et un rééchantillonnage des données adimensionnées vers un nombre de valeurs d'impédance choisi pour le réseau neuronal, et d'autre part un perceptron multicouche dont la couche d'entrée comprend une entrée pour chaque valeur issue du rééchantillonnage réalisé par le convertisseur, au moins une couche cachée, et une couche de sortie pour déterminer une valeur de rotation,
- la couche d'entrée comprend en outre une entrée recevant la largeur du jeu de données de pulse traité par le convertisseur,
- le perceptron multicouche comprend une couche cachée comprenant 20 neurones, et la fonction d'activation de ces neurones est la fonction sigmoïde,
- le perceptron multicouche est entraîné par descente de gradient stochastique après rétro-propagation du gradient de l'erreur, l'erreur d'apprentissage étant calculée à partir d'une fonction de coût basée sur l'erreur quadratique moyenne, et les sorties étant initialisées à 0 pour les entrées dont le jeu de données de pulse associé présente une orientation cellulaire supérieure à 0,3rad pour la valeur d'impédance maximale des valeurs d'impédance de ce jeu de données de pulse, et 1 sinon.

L'invention concerne également un procédé de traitement de signaux d'impédance d'analyses médicales, comprenant les opérations suivantes :
a. recevoir des jeux de données de pulse, chaque jeu de données de pulse comprenant des données de valeur d'impédance associées à chaque fois à un marqueur de temps, ces données représentant ensemble une courbe de valeurs d'impédance cellulaire mesurées lors du passage d'une cellule dans un orifice polarisé,
b. traiter un jeu de données de pulse de l'opération a. en déterminant une valeur de rotation indiquant si la cellule dont a été tirée ce jeu de données de pulse a fait l'objet d'une rotation lors de son passage dans l'orifice polarisé,
c. classer un jeu de données de pulse dans un ensemble de jeux de données de pulse à rotation ou dans un ensemble de jeux de données de pulse sans rotation en fonction de la valeur de rotation obtenue à l'opération b.

Dans diverses variantes, le procédé pourra présenter une ou plusieurs des caractéristiques suivantes :
- l'opération b. comprend :
   b1. déterminer une valeur d'impédance maximale du jeu de données de pulse,
   b2. calculer une valeur d'impédance haute en multipliant la valeur d'impédance maximale par un coefficient haut choisi dans la plage [0,7 ; 0,95], et en déterminant dans le jeu de données de pulse les marqueurs de temps dont la valeur d'impédance associée dans le jeu de données de pulse est égale à la valeur d'impédance haute, et en calculant une durée haute correspondant à la durée maximale entre ces marqueurs de temps,
   b3. calculer une valeur d'impédance basse en multipliant la valeur d'impédance maximale par un coefficient bas choisi dans la plage [0,1 ; 0,6], et en déterminant dans le jeu de données de pulse les marqueurs de temps dont la valeur d'impédance associée dans le jeu de données de pulse est égale à la valeur d'impédance basse, et en calculant une durée basse correspondant à la durée maximale entre ces marqueurs de temps, et
   b4. retourner une valeur de rotation déterminée à partir d'un ratio calculé à partir de la durée haute et de la durée basse,
- le coefficient haut est choisi dans la plage [0,8 ; 0,9],
- le coefficient bas est choisi dans la plage [0,3 ; 0,6],
- le coefficient haut vaut 0,875 et le coefficient bas vaut 0,5,
- l'opération b4. retourne une valeur de rotation égale à la division de la durée haute par la durée basse, et l'opération c. classe un jeu de données de pulse dont la valeur de rotation est strictement inférieure à 0,45 dans l'ensemble de jeux de données de pulse à rotation et pour classer un jeu de données de pulse dont la valeur de rotation est supérieure à 0,45 dans l'ensemble de jeux de données de pulse sans rotation,
- l'opération b. est réalisée par un réseau neuronal comprenant d'une part un convertisseur agencé pour traiter un jeu de données de pulse pour l'adapter en vue d'un traitement par un réseau neuronal, agencé pour réaliser un adimensionnement des marqueurs de temps et des valeurs d'impédance et un rééchantillonnage des données adimensionnées vers un nombre de valeurs d'impédance choisi pour le réseau neuronal, et d'autre part un perceptron multicouche dont la couche d'entrée comprend une entrée pour chaque valeur issue du rééchantillonnage réalisé par le convertisseur, au moins une couche cachée, et une couche de sortie pour déterminer une valeur de rotation,
- la couche d'entrée comprend en outre une entrée recevant la largeur du jeu de données de pulse traité par le convertisseur,
- le perceptron multicouche comprend une couche cachée comprenant 20 neurones, et la fonction d'activation de ces neurones est la fonction sigmoïde,
- le perceptron multicouche est entraîné par descente de gradient stochastique après rétro-propagation du gradient de l'erreur, l'erreur d'apprentissage étant calculée à partir d'une fonction de coût basée sur l'erreur quadratique moyenne, et les sorties étant initialisées à 0 pour les entrées dont le jeu de données de pulse associé présente une orientation cellulaire supérieure à 0,3rad pour la valeur d'impédance maximale des valeurs d'impédance de ce jeu de données de pulse, et 1 sinon.

D'autres caractéristiques et avantages de l'invention apparaîtront mieux à la lecture de la description qui suit, tirée d'exemples donnés à titre illustratif et non limitatif, tirés des dessins sur lesquels :
- [fig.1] représente une vue de principe de l'orifice de mesure dans le cadre de l'invention, ainsi que des trajectoires que peut prendre une cellule dans celui-ci,
- [fig.2] représente des mesures de pulses pour les trajectoires de la figure 1,
- [fig.3] représente un schéma d'un premier mode de réalisation d'un dispositif selon l'invention,
- [fig.4] représente un exemple de classification opérée par le dispositif de la figure 3 sur un échantillon de sang humain et sa comparaison avec la répartition réelle des pulses correspondants,
- [fig.5] représente un schéma d'un second mode de réalisation d'un dispositif selon l'invention, et
- [fig.6] représente un histogramme de résultats sur un échantillon de sang réel du calcul de la valeur de rotation par le deuxième mode de réalisation.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

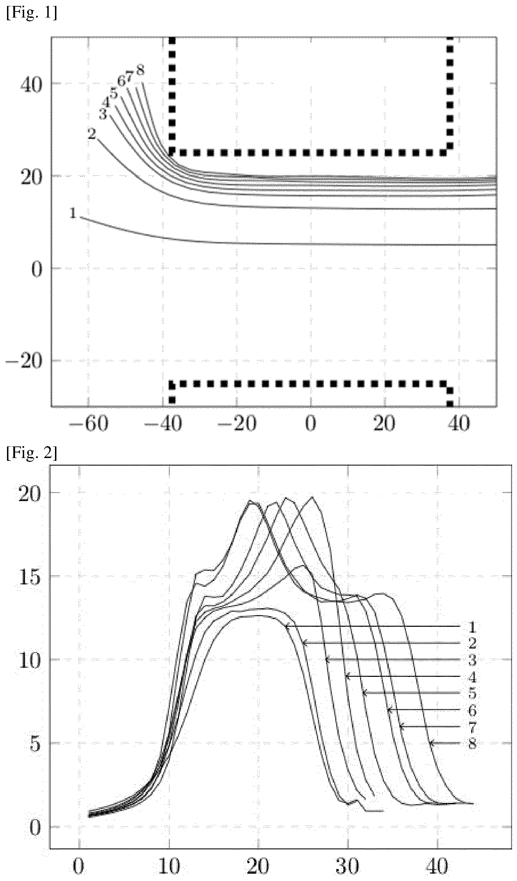

La figure 1 représente une vue de principe de l'orifice de mesure dans le cadre de l'invention, ainsi que des trajectoires que peut prendre une cellule dans celui-ci. L'orifice présente des parois représentées en pointillés, l'abscisse et l'ordonnée s'exprimant en µm.

La figure 2 représente les pulses d'impédance mesurés pour chacune des trajectoires de la figure 1. L'abscisse s'exprime en µs, tandis que l'ordonnée s'exprime en ohm. Comme on peut le voir, plus la cellule a une trajectoire incidente près d'une des parois de l'orifice, plus la mesure est chaotique, et cause d'erreurs expliquées en introduction.

La Demanderesse a mené des travaux de simulation poussés, qui lui ont permis d'identifier le fait que les surestimations de volume sont directement liées aux mouvements de rotation des cellules dans le micro-orifice. En d'autres termes, caractériser la rotation à partir des signaux d'impédance et mettre en place des méthodes de filtrages basées sur cette rotation assurent une mesure des paramètres volumétriques des cellules beaucoup plus robuste que les filtrages classiques basés sur l'analyse des hauteurs et des largeurs, et des résultats comparables aux systèmes hydrofocalisés.

Plus particulièrement, la Demanderesse a identifié dans ses simulations qu'une cellule qui suit une trajectoire proche d'une paroi, et qui présente en réponse un pulse complexe, fait systématiquement l'objet d'une rotation lors de sa traversée de l'orifice. Il est donc utile d'écarter les pulses pour lesquels on identifie qu'une cellule a fait l'objet d'une rotation aux fins de calculer le VGM et l'IDR de manière fiable et précise.

Aucun des travaux de l'état de l'art n'avait établi avec précision la corrélation entre l'inexploitabilité des pulses et la présence d'une rotation de la cellule, et aucun de ces travaux ne présente un moyen d'identifier si une cellule a fait l'objet d'une rotation dans l'orifice à partir de son pulse d'impédance.

La Demanderesse a identifié deux méthodes permettant de déterminer et/ou de quantifier de manière fiable si une cellule a fait l'objet d'une rotation dans l'orifice.

La première méthode est basée sur le traitement du signal, qui vise à déterminer la présence d'un pic dans le pulse d'impédance mesuré. En effet, les cellules qui passent au centre de l'orifice et dont les pulses d'impédance sont utiles pour calculer un VGM et un IDR fiable présentent des pulses d'impédance en cloche, comme les trajectoires 1 et 2 de la figure 1. Les autres trajectoires induisent des pulses présentant un pic qui correspond à la rotation la plus proche de 90° pour la cellule dans l'orifice. Cette méthode sera commentée en référence au premier mode de réalisation.

La deuxième méthode est basée sur un réseau neuronal entraîné pour reconnaître des pulses d'impédance associé aux trajectoires 1 et 2 de la figure 1. Cette méthode sera commentée en référence au second mode de réalisation.

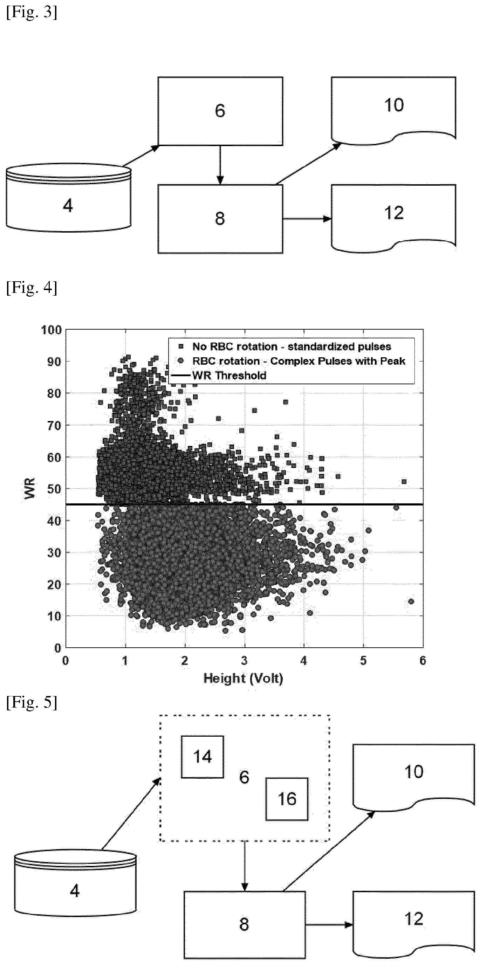

La figure 3 représente un schéma d'un premier mode de réalisation d'un dispositif selon l'invention. Dans ce mode de réalisation, le dispositif comprend une mémoire 4, un calculateur 6 et un classificateur 8.

La mémoire 4 peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire similaire à la mémoire 4, ou sur celle-ci. Ces données peuvent être effacées après que le dispositif a effectué ses tâches ou conservées.

Dans l'exemple décrit ici, la mémoire 4 reçoit des jeux de données de pulse. Un jeu de données de pulse représente l'ensemble des données qui permettent de caractériser un pulse d'impédance représenté sur la figure 2. C'est donc un ensemble de couples (valeur d'impédance mesurée ; marqueur de temps), qui définissent ensemble une courbe comme celles de la figure 2. Dans la pratique, le jeu de données de pulse sera en général un échantillonnage de la sortie de détection de l'orifice. Le jeu de données de pulse peut également être une courbe continue, auquel cas le calculateur 6 sera adapté en conséquence.

Le calculateur 6 et le classificateur 8 sont des éléments accédant directement ou indirectement à la mémoire 4. Ils peuvent être réalisés sous la forme d'un code informatique approprié exécuté sur un ou plusieurs processeurs. Par processeurs, il doit être compris tout processeur adapté aux calculs décrits plus bas. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille ou dans le cloud, d'un micro-contrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée.

Il convient de noter que le dispositif selon l'invention peut avantageusement être intégré dans un dispositif d'analyse hématologique, ou être déporté. Il peut donc être totalement intégré au dispositif d'analyse hématologique ou par exemple être un service Web auquel le dispositif d'analyse hématologique se connecte lorsque nécessaire ou souhaité.

Comme indiqué, la mémoire 4 reçoit les jeux de données de pulse mesurés lorsque les cellules traversent l'orifice. Le classificateur 8 est alors agencé pour appeler le calculateur 6 afin de déterminer une valeur de rotation pour le jeu de données de pulse qui vient d'être mesuré, ou pour un autre jeu de données de pulse qui est stocké dans la mémoire 4. A partir de la valeur de rotation calculée par le calculateur 6, le classificateur 8 classe le jeu de données de pulse dans un ensemble de jeux de données de pulse avec rotation ou dans un ensemble de jeux de données de pulse sans rotation. Une fois ces ensembles de jeux de données de pulses établis, il est possible pour un dispositif d'hématologie d'utiliser l'ensemble de jeux de données de pulse sans rotation pour déterminer de manière fiable le VGM et l'IDR. Pour note, le VGM est obtenu en gardant les pulses au-delà de 10% de la valeur maximale des pulses, et en moyennant les volumes résultants, et l'IDR est obtenu en multipliant l'écart-type des pulses ayant servi à calculer le VGM, en le multipliant par 100 et en divisant le tout par le VGM. En variante, la valeur de 10% peut être baissée à 2%.

Le calculateur 6 est agencé pour traiter le jeu de données de pulse afin de calculer une valeur indiquant si la cellule a subi une rotation. Pour cela, la Demanderesse a observé les différentes formes de pulses en fonction des trajectoires et en a déduit une grandeur qui permet de séparer avec fiabilité les deux populations de cellules. Pour cela, elle a établi une grandeur appelée WR. La grandeur WR est un ratio entre deux largeurs de pulse. Ces largeurs, prises à des instants particuliers, permettent d'indiquer la présence d'un pic dans le pulse, ou au contraire un pulse en forme de cloche.

Pour cela, le calculateur 6 détermine d'abord la hauteur maximale du pulse dans le jeu de données de pulse. La hauteur maximale est utilisée pour calculer une valeur d'impédance haute et une valeur d'impédance basse.

La valeur d'impédance haute est obtenue en multipliant la valeur d'impédance maximale (qui correspond à la hauteur maximale) par un coefficient haut. Ce coefficient haut sert à déterminer deux instants qui, en général, permettent de bien approximer la largeur du pic d'impédance d'un pulse. Pour cela, le coefficient haut est choisi dans la plage [0,7 ; 0,95], et préférentiellement [0,8 ; 0,9], qui assure d'avoir au moins deux instants, et que ces instants correspondent bien au pic des pulses (afin de limiter les cas où plusieurs pics sont présents).

Ainsi la valeur d'impédance haute est inférieure à la valeur d'impédance maximale et supérieure à 70% de celle-ci. Les travaux de la Demanderesse ont montré que cette plage permet de bien capturer les pics des pulses produits. La Demanderesse a identifié que la valeur de 0,875 est particulièrement avantageuse et donne les meilleurs résultats : elle permet d'estimer de la manière la plus précise les pics des pulses. En effet, les pics autour de la hauteur maximale sont en général assez étroits.

La valeur d'impédance basse est obtenue en multipliant la valeur d'impédance maximale par un coefficient bas. Ce coefficient bas sert à déterminer deux instants qui, en général, permettent de bien approximer la largeur du pulse d'impédance. Pour cela, le coefficient bas est choisi dans la plage [0,1 ; 0,6], et préférentiellement [0,3 ; 0,6] qui assure d'avoir deux instants, et que ces instants correspondent à la largeur générale du pulse.

Ainsi la valeur d'impédance basse est comprise entre 30% et 60% de la valeur d'impédance maximale. Les travaux de la Demanderesse ont montré que cette plage permet de bien capturer la largeur des pulses produits en éliminant le bruit. La Demanderesse a identifié que la valeur de 0,5 est particulièrement avantageuse et donne les meilleurs résultats : les pentes des pulses en dessous de 50% de la hauteur maximale sont très abruptes, et cette valeur permet d'éviter tout risque de mesure bruitée.

Une fois la valeur d'impédance haute et la valeur d'impédance basse déterminées, le calculateur 6 détermine la durée entre les deux instants du jeu de données de pulse qui sont les plus éloignés temporellement entre eux, et qui ont respectivement la valeur d'impédance haute ou la valeur d'impédance basse. La durée associée à la valeur d'impédance haute est appelée durée haute, et la durée associée à la valeur d'impédance basse est appelée durée basse. Instinctivement, il apparaît que la durée haute correspond sensiblement à la largeur du pic d'impédance d'un jeu de données de pulse, et que la durée basse correspond sensiblement à la largeur de pulse.

Enfin, le calculateur 6 détermine la valeur de rotation en réalisant le rapport entre la durée haute et la durée basse. Ici encore, il est instinctif qu'une valeur de rotation faible indique la présence d'un pic (et donc une rotation), alors qu'une valeur de rotation élevée indique un pulse en forme de cloche. Il va de soi que le rapport pourrait être inversé (et les conclusions de la même manière). De même, la valeur de rotation pourrait être calculée sur la base de ce rapport élevé à une puissance choisie ou d'une exponentielle de ce rapport.

Les simulations de la Demanderesse ont montré que la valeur de 0,45 pour la valeur de rotation est très discriminante, et permet de séparer les cellules ayant une trajectoire semblable aux trajectoires 1 et 2 de la figure 2 des autres cellules (l'échelle de la figure 2 est comprise entre 0 et 100 pour des valeurs de WR comprises entre 0 et 1). C'est donc ce seuil qui est utilisé par le classificateur 8 pour placer le jeu de données de pulse dans l'ensemble de jeux de données de pulse avec rotation ou dans l'ensemble de jeux de données de pulse sans rotation.

Il va de soi que l'homme du métier saura adapter le coefficient haut, le coefficient bas, l'utilisation d'une puissance pour le calcul de la valeur de rotation ainsi que le seuil pour le classificateur.

Il serait également possible de faire plusieurs tests de calibration pour optimiser le choix du coefficient haut, du coefficient bas et du seuil. En effet, on sait que l'ensemble de jeux de données de pulse sans rotation devrait présenter une distribution gaussienne. Dans la mesure où les coûts de calculs sont assez légers, on pourrait envisager que le calculateur 6 opère avec plusieurs couples de coefficient haut et de coefficient bas, et que soit conservé le couple qui permet d'obtenir une répartition « la plus gaussienne » en sortie.

La figure 4 représente un exemple de classification par le dispositif selon l'invention pour une acquisition de pulse expérimentale faite à partir d'un échantillon de sang provenant d'un patient sain. Les pulses ont été étudiés manuellement pour les classifier manuellement, séparément de leur traitement par le dispositif selon l'invention. Sur cette figure, les points carrés indiquent un pulse en cloche, et les points arrondis un pulse avec un pic. Il apparaît manifestement que le dispositif discrimine les deux populations de pulse avec une très grande précision.

Le deuxième mode de réalisation va maintenant être décrit en référence à la figure 5. Dans ce mode de réalisation, le calculateur 6 n'est plus centré sur le traitement de signal, mais est un réseau neuronal. En effet, les pulses peuvent être assimilés à des images, et, avec un entraînement adapté, la Demanderesse a considéré qu'un réseau neuronal pourrait être particulièrement performant pour classifier les pulses en ensemble de jeux de données de pulse avec une rotation ou sans rotation.

Pour cela, le calculateur 6 comprend un convertisseur 14 et un perceptron multicouche 16. En effet, les pulses présentent des largeurs et des amplitudes très diverses, et il convient donc de les normaliser par une opération d'adimensionnement en vue de fiabiliser l'entraînement du perceptron multicouche 16 et la qualité de sa détection. Ainsi, le convertisseur 14 est agencé pour recevoir un jeu de données de pulse et pour réaliser un adimensionnement en amplitude et en temps.

Pour l'opération d'adimensionnement en amplitude, le jeu de données de pulse est normalisé avec la valeur d'amplitude maximale du jeu de données. Il en résulte un jeu de données de pulse qui présente des valeurs comprises entre 0 et 1.

Pour l'opération d'adimensionnement en temps, la Demanderesse s'est appuyée sur la forme des pulses. En effet, comme mentionné précédemment, la pente des pulses est très importantes près des bords. Par conséquent, en considérant la largeur du pulse à 50% de la valeur d'impédance maximale, on obtient une bonne estimation de la largeur. Ainsi, le convertisseur 14 met à l'échelle le jeu de données de pulse sur la base de cette largeur. Afin de s'assurer que le jeu de données de pulse résultant contient suffisamment de points de données pour le perceptron multicouche 16, le jeu de données de pulse adimensionné temporellement peut être rééchantillonné si nécessaire.

L'adimensionnement en amplitude et en temps peut être réalisé de manière séquentielle (amplitude puis temps, ou temps puis amplitude) ou simultanément.

Une fois le jeu de données de pulse mis en forme pour le perceptron multicouche 16, il est traité par ce dernier, qui retourne une valeur de rotation comprise entre 0 et 1 dans l'exemple décrit ici. Le perceptron multicouche 16 comprend dans l'exemple décrit ici une couche d'entrée, une couche cachée et une couche de sortie. La couche d'entrée comprend un nombre d'entrée qui est égal aux nombres d'échantillons du jeu de données de pulse mis en forme par le convertisseur 14 ajouté d'une entrée qui reçoit la largeur du pulse. La Demanderesse a établi que l'entrée portant sur la largeur du pulse n'est pas indispensable (elle est donc optionnelle), mais qu'elle permet néanmoins d'obtenir les meilleurs résultats. Dans l'exemple décrit ici, le nombre d'échantillons est égal à 20.

La Demanderesse a étudié diverses stratégies d'entraînement et d'exploitation du perceptron multicouche 16, et les résultats les plus favorables en termes de temps d'entraînement et de coûts de calculs ont été obtenus avec une couche cachée qui comprend 20 neurones, et une fonction d'activation (la même pour chaque neurone) qui est la fonction sigmoïde. L'étude de la valeur des sorties du perceptron multicouche 16 a montré qu'un seuil à 0,5 sur la couche de sortie permet de réaliser une ségrégation efficace et d'obtenir une répartition gaussienne de la population, qui confirme la qualité des résultats obtenus.

Cela est rendu possible grâce à un entraînement du perceptron multicouche 16 à partir de 120 pulses qui ont été générés en faisant varier la trajectoire et les paramètres de la cellule (la sphéricité, la viscosité interne, le module du cisaillement de la membrane...). Les pulses ont ensuite été mis en forme par le convertisseur 14, et associés à une valeur de sortie valant 0 ou 1 selon que l'orientation de la cellule au maximum d'amplitude du pulse était supérieure ou inférieure à 0,3rad (seuil qui permet de conserver les cellules correspondant aux trajectoires 1 et 2 sur la figure 2). Ensuite, l'entraînement a été réalisé par descente de gradient stochastique après rétro-propagation du gradient de l'erreur. L'algorithme ADAM (décrit dans l'article de Diederik et al: « A method for stochastic optimization » International Conférence on Learning Representations, pages 1-13, 2015 est utilisé pour la mise à jour des poids et l'erreur d'apprentissage est évaluée à l'aide de la fonction de coût basée sur l'erreur quadratique moyenne.

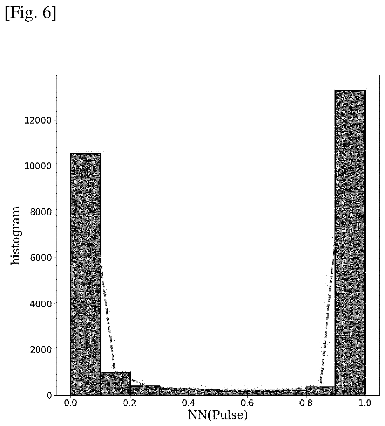

Afin de valider ce deuxième mode de réalisation, le perceptron multicouche 16 entrainé a été testé sur une acquisition de pulses expérimentales faite à partir d'un échantillon de sang frais provenant d'un patient sain sur un système sans focalisation hydrodynamique. La figure 6 montre la distribution des valeurs prédites par le réseau de neurone sur les pulses expérimentales. On observe deux zones à forte concentration ([0 ; 0,1] et [0,9 ; 1]) encadrant une zone intermédiaire étalée entre 0,1 et 0,9 à faible concentration. Les zones à forte concentration correspondent aux pulses pour lesquelles le modèle réussi parfaitement à statuer sur la présence de rotation. La zone intermédiaire que le réseau à plus de mal à traiter, peut s'expliquer par des signatures de pulse non présentes dans le jeu d'entraînement numérique, tel que des passages en coïncidence ou des pulses en dehors de la gamme des paramètres simulés, mais aussi par des erreurs et/ou du bruit de mesure. Pour autant, avec un seuil de séparation à 0,5, la population de pulses sans rotation présente une répartition gaussienne, ce qui valide les résultats.

Bien que la Demanderesse ait identifié que le perceptron multicouche décrit ci-dessus est particulièrement efficace, les paramètres du modèle (nombre de couches cachées, nombres d'entrées dans la couche d'entrée, nombre de neurones dans la couche cachée, fonction d'activation, fonction de coût dans l'entraînement, autres hyperparamètres du modèle) pourraient bien sûr varier sans s'éloigner de l'esprit de l'invention. D'autres architectures de réseau neuronal pourraient également être envisagées (CNN ou autres).

Dans ce qui précède, les plages et valeurs ont été décrites en rapport à une application particulière à des globules rouges et sur une machine dont les paramètres de mesure peuvent varier (tension aux électrodes, taille de l'orifice, débit, etc.). D'autres applications pourront nécessiter une adaptation de ces plages et valeurs.

## Revendications

1. Dispositif d'analyses médicales à traitement de signaux d'impédance cellulaire, comprenant une mémoire (4) agencée pour recevoir des jeux de données de pulse, chaque jeu de données de pulse comprenant des données de valeur d'impédance associées à chaque fois à un marqueur de temps, ces données représentant ensemble une courbe de valeurs d'impédance cellulaire mesurées lors du passage d'une cellule dans un orifice polarisé, **caractérisé en ce qu'**il comprend en outre un calculateur (6) agencé pour traiter un jeu de données de pulse en déterminant une valeur de rotation indiquant si la cellule dont a été tirée ce jeu de données de pulse a fait l'objet d'une rotation lors de son passage dans l'orifice polarisé, et un classificateur (8) agencé pour appeler le calculateur (6) avec un jeu de données de pulse donné, et pour utiliser la valeur de rotation résultante pour classer le jeu de données de pulse donné dans un ensemble de jeux de données de pulse à rotation (10) ou dans un ensemble de jeux de données de pulse sans rotation (12).

2. Dispositif hématologique de traitement de signaux d'impédance cellulaire selon la revendication 1, dans lequel le calculateur (6) est agencé pour traiter un jeu de données de pulse en :
- déterminant une valeur d'impédance maximale du jeu de données de pulse,
- calculant une valeur d'impédance haute en multipliant la valeur d'impédance maximale par un coefficient haut choisi dans la plage [0,7 ; 0,95], et en déterminant dans le jeu de données de pulse les marqueurs de temps dont la valeur d'impédance associée dans le jeu de données de pulse est égale à la valeur d'impédance haute, et en calculant une durée haute correspondant à la durée maximale entre ces marqueurs de temps,
- calculant une valeur d'impédance basse en multipliant la valeur d'impédance maximale par un coefficient bas choisi dans la plage [0,1 ; 0,6], et en déterminant dans le jeu de données de pulse les marqueurs de temps dont la valeur d'impédance associée dans le jeu de données de pulse est égale à la valeur d'impédance basse, et en calculant une durée basse correspondant à la durée maximale entre ces marqueurs de temps,
- retourner une valeur de rotation déterminée à partir d'un ratio calculé à partir de la durée haute et de la durée basse.

3. Dispositif selon la revendication 2, dans lequel le coefficient haut est choisi dans la plage [0,8 ; 0,9].

4. Dispositif selon la revendication 2 ou 3, dans lequel le coefficient bas est choisi dans la plage [0,3 ; 0,6].

5. Dispositif selon la revendication 2, dans lequel le coefficient haut vaut 0,875 et le coefficient bas vaut 0,5.

6. Dispositif selon l'une des revendications 2 à 5, dans lequel le calculateur (6) retourne une valeur de rotation égale à la division de la durée haute par la durée basse, et dans lequel le classificateur (8) est agencé pour classer un jeu de données de pulse dont la valeur de rotation est strictement inférieure à 0,45 dans l'ensemble de jeux de données de pulse à rotation et pour classer un jeu de données de pulse dont la valeur de rotation est supérieure à 0,45 dans l'ensemble de jeux de données de pulse sans rotation.

7. Dispositif selon la revendication 1, dans lequel le calculateur (6) est un réseau neuronal comprenant d'une part un convertisseur (14) agencé pour traiter un jeu de données de pulse pour l'adapter en vue d'un traitement par un réseau neuronal, agencé pour réaliser un adimensionnement des marqueurs de temps et des valeurs d'impédance et un rééchantillonnage des données adimensionnées vers un nombre de valeurs d'impédance choisi pour le réseau neuronal, et d'autre part un perceptron multicouche (16) dont la couche d'entrée comprend une entrée pour chaque valeur issue du rééchantillonnage réalisé par le convertisseur (14), au moins une couche cachée, et une couche de sortie pour déterminer une valeur de rotation.

8. Dispositif selon la revendication 7, dans lequel la couche d'entrée comprend en outre une entrée recevant la largeur du jeu de données de pulse traité par le convertisseur (14).

9. Dispositif selon la revendication 7 ou 8, dans lequel le perceptron multicouche (16) comprend une couche cachée comprenant 20 neurones, et dans lequel la fonction d'activation de ces neurones est la fonction sigmoïde.

10. Dispositif selon l'une des revendications 7 à 9, dans lequel le perceptron multicouche (16) est entraîné par descente de gradient stochastique après rétro-propagation du gradient de l'erreur, l'erreur d'apprentissage étant calculée à partir d'une fonction de coût basée sur l'erreur quadratique moyenne, et les sorties étant initialisées à 0 pour les entrées dont le jeu de données de pulse associé présente une orientation cellulaire supérieure à 0,3rad pour la valeur d'impédance maximale des valeurs d'impédance de ce jeu de données de pulse, et 1 sinon.

## Patentansprüche

1. Vorrichtung für medizinische Analysen mit Zellimpedanz-Signalverarbeitung, umfassend einen Speicher (4), der eingerichtet ist, um Pulsdatensätze zu empfangen, wobei jeder Pulsdatensatz Impedanzwertdaten umfasst, die jedes Mal einem Zeitmarker zugeordnet sind, wobei diese Daten gemeinsam eine Kurve von Zellimpedanzwerten darstellen, die beim Durchgang einer Zelle in einer polarisierten Öffnung gemessen werden, **dadurch gekennzeichnet, dass** sie ferner einen Rechner (6) umfasst, der eingerichtet ist, um einen Pulsdatensatz durch Bestimmen eines Rotationswerts zu verarbeiten, der anzeigt, ob die Zelle, von der dieser Pulsdatensatz abgeleitet wurde, Gegenstand einer Rotation bei ihrem Durchgang in der polarisierten Öffnung war, und einen Klassifikator (8), der eingerichtet ist, um den Rechner (6) mit einem gegebenen Pulsdatensatz anzurufen und um den resultierenden Rotationswert zu verwenden, um den gegebenen Pulsdatensatz in einer Gesamtheit von Pulsdatensätzen mit Rotation (10) oder in einer Gesamtheit von Pulsdatensätzen ohne Rotation (12) zu klassifizieren.

2. Hämatologische Vorrichtung zur Zellimpedanz-Signalverarbeitung nach Anspruch 1, wobei der Rechner (6) eingerichtet ist, um einen Pulsdatensatz zu verarbeiten durch:
- Bestimmen eines maximalen Impedanzwerts des Pulsdatensatzes,
- Berechnen eines hohen Impedanzwerts durch Multiplizieren des maximalen Impedanzwerts mit einem hohen Koeffizienten, der im Bereich [0,7; 0,95] ausgewählt ist, und durch Bestimmen, in dem Pulsdatensatz, der Zeitmarker, deren zugeordneter Impedanzwert in dem Pulsdatensatz gleich dem hohen Impedanzwert ist, und durch Berechnen einer hohen Dauer, die der maximalen Dauer zwischen diesen Zeitmarkern entspricht,
- Berechnen eines niedrigen Impedanzwerts durch Multiplizieren des maximalen Impedanzwerts mit einem niedrigen Koeffizienten, der im Bereich [0,1; 0,6] ausgewählt ist, und durch Bestimmen, in dem Pulsdatensatz, der Zeitmarker, deren zugeordneter Impedanzwert in dem Pulsdatensatz gleich dem niedrigen Impedanzwert ist, und durch Berechnen einer niedrigen Dauer, die der maximalen Dauer zwischen diesen Zeitmarkern entspricht,
- Rücksendung eines Rotationswerts, der auf der Basis eines auf der Basis der hohen Dauer und der niedrigen Dauer berechneten Verhältnisses berechnet wird.

3. Vorrichtung nach Anspruch 2, wobei der hohe Koeffizient im Bereich [0,8; 0,9] ausgewählt ist.

4. Vorrichtung nach Anspruch 2 oder 3, wobei der niedrige Koeffizient im Bereich [0,3; 0,6] ausgewählt ist.

5. Vorrichtung nach Anspruch 2, wobei der hohe Koeffizient 0,875 beträgt und der niedrige Koeffizient 0,5 beträgt.

6. Vorrichtung nach einem der Ansprüche 2 bis 5, wobei der Rechner (6) einen Rotationswert zurücksendet, der gleich der Division der hohen Dauer durch die niedrige Dauer ist und wobei der Klassifikator (8) eingerichtet ist, um einen Pulsdatensatz zu klassifizieren, dessen Rotationswert strikt kleiner als 0,45 in der Gesamtheit der Pulsdatensätze mit Rotation ist und um einen Pulsdatensatz zu klassifizieren, dessen Rotationswert größer als 0,45 in der Gesamtheit der Pulsdatensätze ohne Rotation ist.

7. Vorrichtung nach Anspruch 1, wobei der Rechner (6) ein neuronales Netzwerk ist, das zum einen einen Wandler (14) umfasst, der eingerichtet ist, um einen Pulsdatensatz zu verarbeiten, um ihn im Hinblick auf eine Verarbeitung durch ein neuronales Netzwerk anzupassen, der eingerichtet ist, um eine Entdimensionalisierung der Zeitmarker und der Impedanzwerte und ein Resampling der entdimensionalisierten Daten zu einer Anzahl von Impedanzwerten durchzuführen, die für das neuronale Netzwerk ausgewählt ist, und zum anderen ein Multilayer-Perzeptron (16), dessen Eingangsschicht einen Eingang für jeden Wert umfasst, der aus dem Resampling hervorgegangen ist, das von dem Wandler (14) durchgeführt wurde, mindestens eine verborgene Schicht und eine Ausgangsschicht, um einen Rotationswert zu bestimmen.

8. Vorrichtung nach Anspruch 7, wobei die Eingangsschicht ferner einen Eingang umfasst, die die Breite des von dem Wandler (14) verarbeiteten Pulsdatensatz empfängt.

9. Vorrichtung nach Anspruch 7 oder 8, wobei das Multilayer-Perzeptron (16) eine verborgene Schicht umfasst, die 20 Neuronen umfasst, und wobei die Aktivierungsfunktion dieser Neuronen die Sigmoidfunktion ist.

10. Vorrichtung nach einem der Ansprüche 7 bis 9, wobei das Multilayer-Perzeptron (16) durch stochiastischen Gradientenabstieg nach Retropropagation des Fehlergradienten angetrieben wird, wobei der Lernfehler auf der Basis einer Kostenfunktion, basierend auf dem mittleren Quadratfehler, berechnet wird, und die Ausgänge für die Eingänge, deren zugeordneter Pulsdatensatz eine zelluläre Orientierung über 0,3 rad für den maximalen Impedanzwert der Impedanzwerte dieses Pulsdatensatzes beträgt, auf 0 initialisiert sind, und ansonsten 1.

## Claims

1. Device for medical analyses with cellular impedance signal processing, comprising a memory (4) arranged to receive pulse data sets, each pulse data set comprising impedance value data that are associated each time with a time marker, these data together representing a curve of cellular impedance values that are measured as a cell passes through a polarised opening,
**characterised in that** it further comprises a calculator (6) arranged to process a pulse data set by determining a rotation value indicating whether the cell from which this pulse data set has been obtained has undergone a rotation during its passage through the polarised opening, and a classifier (8) arranged to provide the calculator (6) with a given pulse data set, and to use the resulting rotation value to classify the given pulse data set in a rotation pulse data set group (10) or a rotationless pulse data set group (12).

2. Haematological device for cellular impedance signal processing according to claim 1, wherein the calculator (6) is arranged to process a pulse data set by:
- determining a maximum impedance value of the pulse data set,
- calculating an upper impedance value by multiplying the maximum impedance value by an upper coefficient chosen in the range [0.7; 0.95], and by determining in the pulse data set the time markers for which the associated impedance value in the pulse data set is equal to the upper impedance value, and by calculating an upper duration corresponding to the maximum duration between these time markers,
- calculating a lower impedance value by multiplying the maximum impedance value by an upper coefficient chosen in the range [0.1; 0.6], and by determining in the pulse data set the time markers for which the associated impedance value in the pulse data set is equal to the lower impedance value, and by calculating a lower duration corresponding to the maximum duration between these time markers,
- returning a rotation value determined from a ratio calculated from the upper duration and the lower duration.

3. Device according to claim 2, wherein the upper coefficient is chosen in the range [0.8; 0.9].

4. Device according to claim 2 or 3, wherein the lower coefficient is chosen in the range [0.3; 0.6].

5. Device according to claim 2, wherein the upper coefficient equals 0.875 and the lower coefficient equals 0.5.

6. Device according to one of claims 2 to 5, wherein the calculator (6) returns a rotation value equal to the division of the upper duration by the lower duration, and wherein the classifier (8) is arranged to classify a pulse data set for which the rotation value is strictly less than 0.45 in the rotation pulse data set group and to classify a pulse data set for which the rotation value is greater than 0.45 in the rotationless pulse data set group.

7. Device according to claim 1, wherein the calculator (6) is a neural network comprising, on one hand, a converter (14) arranged to process a pulse data set to adapt it to processing by a neural network, arranged to make the time markers and the impedance values dimensionless and resample the dimensionless data to a chosen number of impedance values for the neural network, and, on the other, a multilayer perceptron (16) for which the input layer comprises an input for each value from the resampling performed by the converter (14), at least one hidden layer, and an output layer to determine a rotation value.

8. Device according to claim 7, wherein the input layer further comprises an input receiving the width of the pulse data set processed by the converter (14).

9. Device according to claim 7 or 8, wherein the multilayer perceptron (16) comprises a hidden layer comprising 20 neurons, and the activation function of these neurons is the sigmoid function.

10. Device according to one of claims 7 to 9, wherein the multilayer perceptron (16) is trained by stochastic gradient descent after error gradient back propagation, the training error being calculated from a cost function based on the root mean square error, and the outputs being set to 0 for the inputs for which the associated pulse data set have a cellular orientation greater than 0.3rad for the maximum impedance value of the impedance values of this pulse data set, and 1 otherwise.
